# EUROPÄISCHE PATENTSCHRIFT

(11) **EP 3 604 072 B1**
(45) Veröffentlichungstag und Bekanntmachung des Hinweises auf die Patenterteilung: **09.02.2022**
(21) Anmeldenummer: 18187294.6
(22) Anmeldetag: 03.08.2018
(51) Int. Cl.: B61D 3/18

(54) **HEBBARE TRAGVORRICHTUNG**
LIFTABLE CARRYING DEVICE
DISPOSITIF PORTEUR ÉLEVABLE

(43) Veröffentlichungstag der Anmeldung: 05.02.2020
(73) Patentinhaber: Kässbohrer Transport Technik GmbH, 5301 Eugendorf (AT); Blum, Franz, 5020 Salzburg (AT)
(72) Erfinder: BLUM, Franz, 5020 Salzburg (AT); FÖSSL, Horst, 5061 Elsbethen (AT)
(74) Vertreter: Torggler & Hofinger Patentanwälte

(56) Entgegenhaltungen:
- EP-A2- 0 297 081
- WO-A1-01/72593
- WO-A1-2016/141399
- WO-A2-2014/017917
- CN-Y- 2 406 886
- FR-A1- 2 148 069
- US-A- 4 986 705

## Beschreibung

Die Erfindung betrifft einen Taschenwagen mit einer hebbaren Tragvorrichtung mit den Merkmalen des Oberbegriffs des Anspruchs und Verfahren zum Be- oder Entladen eines Taschenwagens mit den Merkmalen des Oberbegriffs des Anspruchs 12 bzw. 13.

Mit einer solchen Tragvorrichtung kann Ladegut, das selbst nicht unmittelbar kranbar sein muss, in vielfältiger Form verladen werden, da die Tragvorrichtung selbst kranbar ist. Beim Ladegut kann es sich beispielsweise um Fahrzeuge (z. B. Sattelanhänger, Zugmaschinen, Traktoren, Busse) oder um nicht fahrfähiges Ladegut (z. B. Container) handeln.

WO 2014/017917 A2 zeigt eine nicht-gattungsgemäße hebbare Tragvorrichtung, welche sich nicht für den Einsatz in Kombination mit einem Taschenwagen eignet, da ein mit einer solchen Tragvorrichtung beladener Taschenwagen im beladenen Zustand eine unzulässig große Höhe aufweisen würde. Der Be- und Entladevorgang ist nur erschwert möglich, weil bereits geladene Fahrzeuge das Be- und Entladen behindern.

Eine gattungsgemäße hebbare Tragvorrichtung, ein Taschenwagen mit einer solchen Tragvorrichtung und ein gattungsgemäßes Verfahren gehen aus EP 297 081 A2 hervor. Diese Schrift offenbart eine modulare Tragvorrichtung in dem Sinn, dass eine Vielzahl von Abstützungen vorgesehen ist, welche unabhängig voneinander be- und entladen und auf einen bzw. von einem Taschenwagen gehoben werden können und im Bereich einer Tasche des Taschenwagens aufeinander stapelbar sind. Außerhalb der Tasche des Taschenwagens ist jeweils eine höher ausgebildete Abstützung vorgesehen. Ein Be- und Entladevorgang dauert sehr lange, weil jede Abstützung für sich auf den bzw. von dem Taschenwagen gehoben werden muss. Weiter wird zum technischen Umfeld auf die CN 2 406 886 Y und die US 4 986 705 A verwiesen.

Aufgabe der Erfindung ist die Bereitstellung eines Taschenwagens mit einer Tragvorrichtung und eines Verfahrens, bei welchen ein schnelleres Be- und Entladen möglich ist, wobei der Be- und Entladevorgang nicht durch bereits geladene Fahrzeuge erschwert werden soll.

Diese Aufgabe wird durch einen Taschenwagen mit einer hebbaren Tragvorrichtung mit den Merkmalen des Anspruchs 1 und Verfahren mit den Merkmalen des Anspruchs 12 oder 13 gelöst. Vorteilhafte Ausführungsformen der Erfindung sind in den abhängigen Ansprüchen definiert. Weil die erste und die wenigstens eine zweite Abstützung für ein gemeinsames Heben durch die Hubvorrichtung lösbar miteinander verbindbar oder verbunden sind und eine Tragvorrichtung bilden, kann die aus erster und wenigstens einer zweiter Abstützung gebildete Tragvorrichtung als Einheit auf einen und von einem Taschenwagen gehoben werden, wobei die erste und wenigstens eine zweite Abstützung gesondert be- und entladbar sind, was den Be- und Entladevorgang beschleunigt und erleichtert. Ist mehr als eine zweite Abstützung vorgesehen, bilden diese eine Einheit mit der ersten Abstützung.

Bei einem erfindungsgemäßen Verfahren zum Beladen eines Taschenwagens sind bevorzugt unter Verwendung einer erfindungsgemäßen Tragvorrichtung wenigstens folgende Schritte vorgesehen:
- Bereitstellen einer ersten und wenigstens einer zweiten Abstützung auf einem Terminalflur, wobei die erste und die wenigstens eine zweite Abstützung unabhängig voneinander auf dem Terminalflur aufstehen
- Beladen der wenigstens einen zweiten Abstützung und ggf. der ersten Abstützung mit den zu ladenden Fahrzeugen, vorzugsweise durch Auffahren der Fahrzeuge auf die erste und/oder wenigstens eine zweite Abstützung
- Abstellen der wenigstens einen beladenen zweiten Abstützung auf die erste Abstützung vor dem Anheben auf den Taschenwagen zur Bildung einer als Einheit hebbaren Tragvorrichtung, insbesondere einer erfindungsgemäßen Tragvorrichtung
- ggf. Beladen der ersten Abstützung - falls diese nicht bereits vollständig beladen wurde - vorzugsweise durch Auffahren des Fahrzeuges oder der Fahrzeuge
- Heben der Tragvorrichtung mittels einer Hubvorrichtung auf den Taschenwagen so, dass die wenigstens eine zweite Abstützung oberhalb der ersten Abstützung angeordnet ist und die erste Abstützung zumindest teilweise in eine Tasche des Taschenwagens hineinragt

Bei einem erfindungsgemäßen Verfahren zum Entladen eines Taschenwagens sind bevorzugt unter Verwendung einer erfindungsgemäßen Tragvorrichtung wenigstens folgende Schritte vorgesehen:
- Wegheben der Tragvorrichtung als Einheit mittels einer Hubvorrichtung vom Taschenwagen und Abstellen auf einem Terminalflur
- ggf. Entladen der ersten Abstützung durch Abfahren der Fahrzeuge von der ersten Abstützung
- Wegheben der wenigstens einen zweiten Abstützung von der ersten Abstützung und Abstellen der wenigstens einen zweiten Abstützung auf einem Terminalflur
- Entladen der wenigstens einen zweiten Abstützung und ggf. der ersten Abstützung, vorzugsweise durch Abfahren der Fahrzeuge von der ersten und zweiten Abstützung

Die Erfindung weist den Vorteil auf, dass ein durch einen Taschenwagen zur Verfügung gestellter Laderaum optimal ausgenutzt werden kann, weil für die Beladung über, unter und zwischen Fahrzeugen bestehender Raum zur Beladung mit weiteren Fahrzeugen genutzt werden kann. Mit anderen Worten ist eine verdichtete (verschachtelte) Beladung des Taschenwagens möglich.

Ist mehr als nur eine zweite Abstützung vorgesehen, so bezieht sich die Länge L₂ auf die Längserstreckung der gesamten Anordnung von zweiten Abstützungen.

In der vorliegenden Offenbarung wird unter Aufnahmeposition jene Position einer Abstützung verstanden, in welcher ein Be- oder Entladen erfolgt. In der Aufnahmeposition kann die Abstützung im Wesentlichen horizontal oder geneigt ausgerichtet sein, und in diesem Fall ist nach Beladung mit einem Fahrzeug dementsprechend auch das Fahrzeug im Wesentlichen horizontal ausgerichtet. Unter Verladeposition wird jene Position einer Abstützung verstanden, in welcher sich das Fahrzeug nach dem Beenden des Beladevorganges gemeinsam mit der Abstützung auf dem Taschenwagen befindet. In der Verladeposition kann das Fahrzeug je nach Ausbildung der Abstützung horizontal oder geneigt ausgerichtet sein.

Sind neigbare Teilbereiche bei der ersten oder zweiten Abstützung vorgesehen, so bezieht sich die jeweilige Länge L₁, L₂ der entsprechenden Abstützung auf den Zustand in der Aufnahmeposition.

Beispielsweise kann die erste Abstützung so ausgebildet sein wie die Tragvorrichtung der WO 2016/141399 A1.

Bevorzugt ist bei einer erfindungsgemäßen Tragvorrichtung vorgesehen, dass die erste Abstützung zwischen zwei Längsträgern oder in einem Tragrahmen angeordnet ist und/oder die zweite Abstützung zwischen zwei Längsträgern oder in einem Tragrahmen angeordnet ist. Die erste und/oder die wenigstens eine zweite Abstützung können in Form einer Platte, in Form von Streben, in Form von Längsträgern oder einer Kombination von wenigstens zwei der vorgenannten ausgebildet sein.

Bevorzugt ist bei einer erfindungsgemäßen Tragvorrichtung vorgesehen, dass die erste und wenigstens eine zweite Abstützung befahrbar ausgebildet sind.

So können die zu ladenden Fahrzeuge auf die erste und die wenigstens eine zweite Abstützung auffahren oder von diesen abfahren, wenn diese unabhängig voneinander auf einem Terminalflur aufgestellt sind.

Bevorzugt ist bei einer erfindungsgemäßen Tragvorrichtung vorgesehen, dass die erste und die wenigstens eine zweite Abstützung jeweils Aufstandsflächen zum unmittelbaren Aufstellen auf einem Terminalflur aufweisen und die erste und die wenigstens eine zweite Abstützung jeweils im aufgestellten Zustand auf dem Terminalflur unabhängig voneinander befahrbar sind.

Bevorzugt ist bei einer erfindungsgemäßen Tragvorrichtung vorgesehen, dass die wenigstens eine zweite Abstützung in ihrem mit der ersten Abstützung verbundenen Zustand durch die erste Abstützung getragen ist, wobei vorzugsweise Koppelstellen vorgesehen sind, über welche die wenigstens eine zweite Abstützung mit der ersten Abstützung lösbar verbindbar oder verbunden ist. Sind mehrere zweite Abstützungen, z. B. zwei oder drei, zweite Abstützungen vorgesehen, sind diese bevorzugt jeweils unabhängig mit der ersten Abstützung verbindbar oder verbunden. Besonders bevorzugt ist vorgesehen, dass die Koppelstellen durch einen Twist-Lock verbindbar oder verbunden sind, wie diese von der Verriegelung von Wechselbehältern oder ISO-Containern bekannt sind.

Die Koppelstellen der zweiten Abstützungen können auch dazu verwendet werden, aufeinander gestapelte zweite Abstützungen miteinander zu verbinden.

Bevorzugt ist bei einer erfindungsgemäßen Tragvorrichtung vorgesehen, dass wenigstens ein Teilbereich der ersten und/oder der wenigstens einen zweiten Abstützung zwischen einer Aufnahmeposition für ein Fahrzeug, bei der das Fahrzeug im Wesentlichen horizontal oder geneigt ausgerichtet ist und einer Verladeposition für das Fahrzeug, in welcher das Fahrzeug geneigt ist, bewegbar ist. Der wenigstens eine neigbare Teilbereich kann eine Arretiervorrichtung zur Arretierung der geneigten Stellung aufweisen. Dabei ist besonders bevorzugt vorgesehen, dass der wenigstens eine neigbare Teilbereich - ggf. bis auf eine Einwirkung einer Dämpfvorrichtung - frei schwenkbar an einem Rahmen oder Längsträgern der ersten bzw. wenigstens einen zweiten Abstützung gelagert ist. Das Verschwenken kann alternativ durch ein von außen angreifendes Hebegerät oder durch an der Tragvorrichtung angeordnete Hubmittel (wie z. B. hydraulische Hubmittel) erfolgen. Anschließend an den wenigstens einen Teilbereich oder - falls wenigstens zwei neigbare Teilbereiche bei einer Abstützung vorgesehen sind - zwischen den zwei neigbaren Teilbereichen der ersten und/oder wenigstens einen zweiten Abstützung kann ein weiterer befahrbarer Teilbereich mit fester (vorzugsweise zumindest im Wesentlichen horizontaler) Ausrichtung angeordnet sein.

Bevorzugt ist bei einer erfindungsgemäßen Tragvorrichtung vorgesehen, dass wenigstens ein Teilbereich der ersten und/oder der wenigstens eine zweiten Abstützung mit einer horizontalen oder geneigten Ausrichtung ausgebildet ist, wobei bevorzugt vorgesehen ist, dass eine Neigung des wenigstens einen Teilbereichs vor einem Beladen vorgebbar ist. Das Vorgeben der Neigung kann z. B. so erfolgen, dass der wenigstens eine Teilbereich in Bezug auf eine Achse schwenkbar gelagert ist und durch eine Unterstützung mit vorgebbarer Höhe abgestützt ist. Weist die Unterstützung eine größere Höhe auf, ist die Neigung des wenigstens einen Teilbereichs geringer, weist sie eine geringere Höhe auf, ist die Neigung größer. Alternativ oder zusätzlich kann das Vorgeben der Neigung so erfolgen, dass der wenigstens eine Teilbereich in Bezug auf eine Achse schwenkbar gelagert ist und die Höhe der Achse wählbar ist. Weist die Achse eine größere Höhe auf, ist die Neigung des wenigstens einen Teilbereichs höher, weist sie eine geringere Höhe auf, ist die Neigung geringer.

Allgemein kann bei einem eine Neigung aufweisenden Teilbereich das Auf- und/oder Abfahren eines Fahrzeuges durch eine Auffahrrampe erleichtert werden.

Das Vorsehen wenigstens eines Teilbereichs, welcher zwischen einer Aufnahmeposition für ein Fahrzeug, bei der das Fahrzeug im Wesentlichen horizontal oder geneigt ausgerichtet ist und einer Verladeposition für das Fahrzeug, in welcher das Fahrzeug geneigt ist, bewegbar ist, erfolgt bevorzugt in Bezug auf die erste Abstützung. Die erste Abstützung lagert direkt auf dem Taschenwagen und so kann - für den Fall, dass das Verschwenken frei erfolgt - die Bewegung von der Aufnahmeposition in die Verladeposition durch das Absenken der Tragvorrichtung auf den Taschenwagen erfolgen, sobald die erste Abstützung mit Teilen des Taschenwagens in Berührung kommt.

Das Vorsehen wenigstens eines Teilbereichs, welcher mit einer horizontalen oder geneigten Ausrichtung ausgebildet ist, wobei bevorzugt vorgesehen ist, dass eine Neigung des wenigstens einen Teilbereichs vor einem Beladen vorgebbar ist, erfolgt bevorzugt in Bezug auf die zweite Abstützung.

Bevorzugt ist bei einer erfindungsgemäßen Tragvorrichtung vorgesehen, dass entlang der Längserstreckung der ersten und wenigstens einen zweiten Abstützung quer zur Längserstreckung eine durchgängige lichte Weite von wenigstens etwa 2600 mm gegeben ist.

Bevorzugt ist bei einer erfindungsgemäßen Tragvorrichtung mit wenigstens zwei neigbaren Teilbereichen vorgesehen, dass der eine neigbare Teilbereich über schwenkbar gelagerte Arme an der ersten Abstützung angeordnet ist, welche bevorzugt außerhalb der befahrbaren Breite der Fahrbahn an Schwenklagern angeordnet sind. Eine Länge der Arme kann so gewählt sein, dass der andere neigbare Teilbereich in einer ersten Schwenkstellung der Arme durch den neigbaren Teilbereich in befahrbarer Weise verlängert ist. In einer zweiten Schwenkstellung der Arme ist der neigbare Teilbereich relativ zu einem Tragrahmen oder Längsträgern der Abstützung geneigt.

Bevorzugt ist bei einer erfindungsgemäßen Tragvorrichtung vorgesehen, dass wenigstens ein neigbarer Teilbereich längenveränderbar ausgebildet ist. Die Längenveränderbarkeit kann durch zwei ineinander verschachtelte, teleskopisch ausziehbare Ausschubteile realisiert sein.

Bevorzugt ist bei einer erfindungsgemäßen Tragvorrichtung vorgesehen, dass eine Position der Tragvorrichtung insbesondere gegen Längsverschiebungen über einen über die Tasche hinausragenden Abschnitt - vorzugsweise mit einem außerhalb der Tasche angeordneten ISO-Zapfen des Taschenwagens - gesichert werden.

Bei einem ersten und vierten Ausführungsbeispiel einer erfindungsgemäßen Tragvorrichtung ist die Länge, über die sich die wenigstens eine zweite Abstützung erstreckt, größer als die Länge, über die sich die erste Abstützung erstreckt.

Beim ersten Ausführungsbeispiel ist die Länge der wenigstens einen zweiten Abstützung bevorzugt so gewählt, dass die wenigstens eine zweite Abstützung in einem auf einen Taschenwagen gehobenen Zustand über die Tasche des Taschenwagens hinausragt und sich die erste Abstützung in ihrer Längserstreckung innerhalb der Tasche des Taschenwagens befindet. Die erste und die wenigstens eine zweite Abstützung weisen eine feste (vorzugsweise zumindest im Wesentlichen horizontale) Ausrichtung auf. Die Position der ersten Abstützung kann insbesondere gegen Längsverschiebungen über einen mit der ersten Abstützung verbundenen, über die Tasche hinausragenden Abschnitt - vorzugsweise mit einem außerhalb der Tasche angeordneten ISO-Zapfen des Taschenwagens - gesichert werden.

Bei alternativen zweiten und dritten Ausführungsbeispielen einer erfindungsgemäßen Tragvorrichtung ist vorgesehen, dass die Länge, über die sich die erste Abstützung erstreckt, größer ist als die Länge, über die sich die wenigstens eine zweite Abstützung erstreckt.

Bei einem zweiten Ausführungsbeispiel der erfindungsgemäßen Tragvorrichtung weist die erste Abstützung zwei neigbare Teilbereiche auf, welche zwischen einer Aufnahmeposition für jeweils ein Fahrzeug, bei der das Fahrzeug im Wesentlichen horizontal oder geneigt ausgerichtet ist und einer Verladeposition für das Fahrzeug, in welcher das Fahrzeug geneigt ist, bewegbar sind. Die neigbaren Teilbereiche sind bevorzugt - ggf. bis auf eine Einwirkung einer Dämpfvorrichtung - frei schwenkbar an einem Rahmen oder Längsträgern der ersten Abstützvorrichtung gelagert, sodass das Verschwenken selbsttätig durch Kontaktierung mit Bereichen des Taschenwagens beim Absenken auf den Taschenwagen erfolgt. Das Verschwenken kann alternativ durch ein von außen angreifendes Hebegerät oder durch an der Tragvorrichtung angeordnete Hubmittel (wie z. B. hydraulische Hubmittel) erfolgen. Zwischen den zwei neigbaren Teilbereichen kann ein weiterer befahrbarer Teilbereich mit fester (vorzugsweise zumindest im Wesentlichen horizontaler) Ausrichtung angeordnet sein.

Die wenigstens eine zweite Abstützung erstreckt sich in Längserstreckung nur über einen Teil der ersten Abstützung und weist daher eine geringere Länge auf als die erste Abstützung. Die zweite Abstützung kann in Form eines Plateaus mit fester (z. B. zumindest im Wesentlichen horizontaler) Ausrichtung ausgebildet sein und sich über Koppelstellen (die an der ersten und zweiten Abstützung angeordnet sind) an der ersten Abstützung abstützen. Zumindest einer der neigbaren Teilbereiche der ersten Abstützung kann sich im geneigten Zustand unter die zweite Abstützung erstrecken. Es kann vorgesehen sein, dass sich die neigbaren Teilbereiche der ersten Abstützung in einem auf einen Taschenwagen gehobenen Zustand über die Tasche des Taschenwagens hinaus erstrecken. Es kann vorgesehen sein, dass sich die zweite Abstützung in ihrer Längserstreckung innerhalb der Tasche des Taschenwagens befindet. Die Schwenkachsen der Neigung der neigbaren Teilbereiche können sich (zumindest in einer Draufsicht) z. B. innerhalb der Tasche des Taschenwagens.

Bei einem dritten Ausführungsbeispiel der erfindungsgemäßen Tragvorrichtung weist die erste Abstützung zwei neigbare Teilbereiche auf, welche jeweils zwischen einer Aufnahmeposition für jeweils ein Fahrzeug, bei der das Fahrzeug im Wesentlichen horizontal oder geneigt ausgerichtet ist und einer Verladeposition für das Fahrzeug, in welcher das Fahrzeug geneigt ist, bewegbar sind. Die neigbaren Teilbereiche sind bevorzugt - ggf. bis auf eine Einwirkung einer Dämpfvorrichtung - frei schwenkbar an einem Rahmen oder Längsträgern der ersten Abstützvorrichtung gelagert, sodass das Verschwenken selbsttätig durch Kontaktierung mit Bereichen des Taschenwagens beim Absenken auf den Taschenwagen erfolgt. Das Verschwenken kann alternativ durch ein von außen angreifendes Hebegerät oder durch an der Tragvorrichtung angeordnete Hubmittel (wie z. B. hydraulische Hubmittel) erfolgen. Die zweite Abstützung weist einen Teilbereich mit vor der Beladung vorgegebener Neigung auf. Zwischen den zwei neigbaren Teilbereichen der ersten Abstützung kann ein weiterer befahrbarer Teilbereich mit fester (vorzugsweise zumindest im Wesentlichen horizontaler) Ausrichtung angeordnet sein.

Die neigbaren Teilbereiche der ersten Abstützung können sich in einem auf einen Taschenwagen gehobenen Zustand über die Tasche des Taschenwagens hinaus erstrecken. Die geneigten Teilbereiche der zweiten Abstützung können sich in ihrer Längserstreckung innerhalb der Tasche des Taschenwagens befinden. Die Schwenkachsen der Neigung der neigbaren Teilbereiche befinden sich z. B. (zumindest in einer Draufsicht) innerhalb der Tasche des Taschenwagens.

Bei einem vierten Ausführungsbeispiel der erfindungsgemäßen Tragvorrichtung ist die erste Abstützung durchgehend mit fester Neigung (vorzugsweise zumindest im Wesentlichen horizontal) ausgebildet und weist die zweite Abstützung drei Teilbereiche auf, deren Neigung vor dem Beladen vorgebbar ist.

Die Teilbereiche der ersten Abstützung können sich in ihrer Längserstreckung innerhalb der Tasche des Taschenwagens befinden. Die geneigten Teilbereiche der zweiten Abstützung können sich in einem auf einen Taschenwagen gehobenen Zustand über die Tasche des Taschenwagens hinaus erstrecken.

Ausführungsbeispiele der Erfindung werden anhand der Figuren diskutiert. Es zeigen:
- Fig. 1 - 4: vier verschiedene Ausführungsbeispiele einer erfindungsgemäßen Tragvorrichtung in schematischen Seitenansichten im in einem Taschenwagen angeordneten Zustand
- Fig. 5a-d: zweite Abstützungen eines Ausführungsbeispiels einer erfindungsgemäßen Tragvorrichtung
- Fig. 5e: eine erste Abstützung eines Ausführungsbeispiels einer erfindungsgemäßen Tragvorrichtung
- Fig. 5f: eine Tragvorrichtung des Ausführungsbeispiels der Fig. 2 mit Fahrzeugen im beladenen Zustand auf einem Taschenwagen unter Verwendung der Abstützungen nach Fig. 5a und 5e
- Fig. 5g: die Tragvorrichtung nach Fig. 5f ohne Fahrzeuge im beladenen Zustand auf einem Taschenwagen
- Fig. 5h: eine perspektivische Ansicht zur Fig. 5g
- Fig. 5i: eine Darstellung einer Koppelstelle einer zweiten Abstützung in Isolation
- Fig. 5j: eine Detailansicht einer zweiten Abstützung mit der Koppelstelle nach Fig. 5i
- Fig. 5k: eine weitere Detailansicht einer zweiten Abstützung mit der Koppelstelle nach Fig. 5i
- Fig. 6a: ein weiteres Ausführungsbeispiel einer erfindungsgemäßen Tragvorrichtung
- Fig. 6b: eine Tragvorrichtung mit Fahrzeugen im beladenen Zustand auf einem Taschenwagen unter Verwendung der Abstützungen nach Fig. 5e und 6a
- Fig. 7a-c: ein erstes Ausführungsbeispiel eines Verfahrens zum Beladen eines Taschenwagens
- Fig. 8a,b: ein zweites Ausführungsbeispiel eines Verfahrens zum Beladen eines Taschenwagens

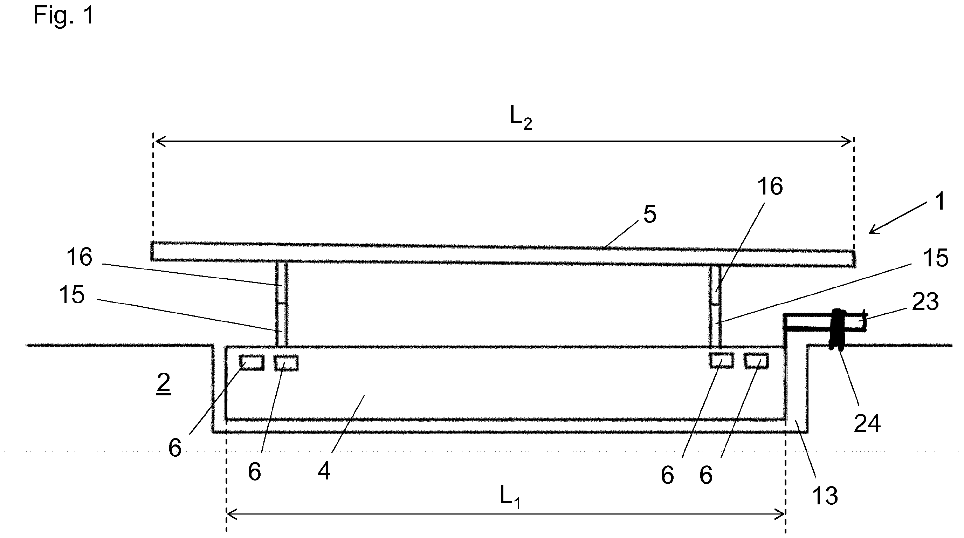

In Fig. 1 ist ein erstes Ausführungsbeispiel einer erfindungsgemäßen Tragvorrichtung 1 in einer schematischen Seitenansicht dargestellt, bei welchem die Länge L₂, über die sich die zweite Abstützung 5 erstreckt, größer ist als die Länge L₁, über die sich die erste Abstützung 4 erstreckt. Die Länge L₂ ist dabei so gewählt, dass die zweite Abstützung 5 über die Tasche 13 des Taschenwagens 2 hinausragt. Die erste und zweite Abstützung 4, 5 sind befahrbar ausgebildet. Die zweite Abstützung 5 stützt sich über Koppelstellen 15, 16 an der ersten Abstützung 4 ab. Die erste Abstützung 4 befindet sich in ihrer Längserstreckung innerhalb der Tasche 13 des Taschenwagens 2. Die erste und die zweite Abstützung 4, 5 weisen eine feste (hier zumindest im Wesentlichen horizontale) Ausrichtung auf. Die Position der ersten Abstützung 4 ist insbesondere gegen Längsverschiebungen über einen über die Tasche 13 hinausragenden Abschnitt 23 mit einem außerhalb der Tasche 13 angeordneten ISO-Zapfen 24 des Taschenwagens 2 gesichert (diese Maßnahme ist nur für dieses Ausführungsbeispiel dargestellt, kann aber bei allen Ausführungsbeispielen vorgesehen sein). In diesem Ausführungsbeispiel kann die zweite Abstützung 5 mit mehr Fahrzeugen 3 (oder einem längeren Fahrzeug) beladen werden als die erste Abstützung 4. Beispielsweise können die erste Abstützung 4 mit zwei Fahrzeugen 3 und die zweite Abstützung 5 mit drei Fahrzeugen 3 beladen sein.

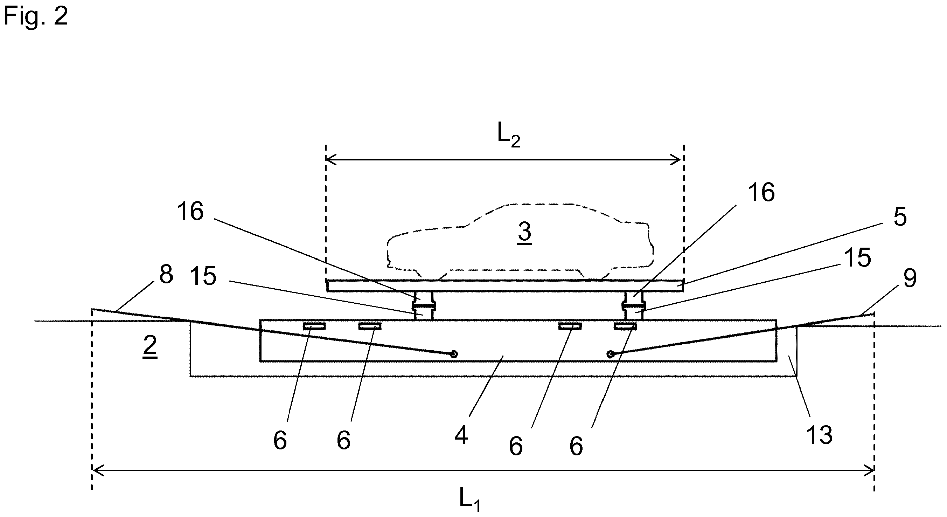

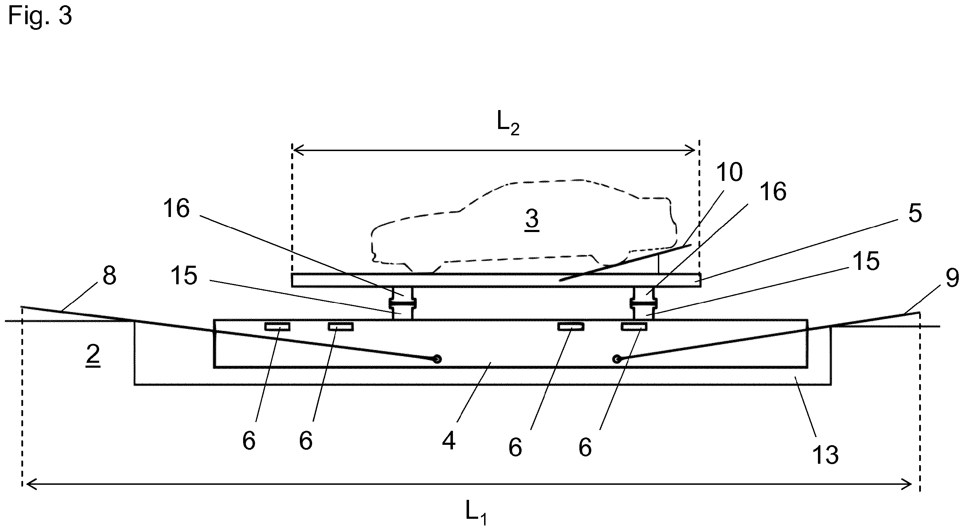

In den Fig. 2 und 3 sind zweite und dritte Ausführungsbeispiele einer erfindungsgemäßen Tragvorrichtung 1 in einer schematischen Seitenansicht dargestellt, bei welchen die Länge L₁, über die sich die erste Abstützung 4 erstreckt, größer ist als die Länge L₂, über die sich die zweite Abstützung 5 erstreckt.

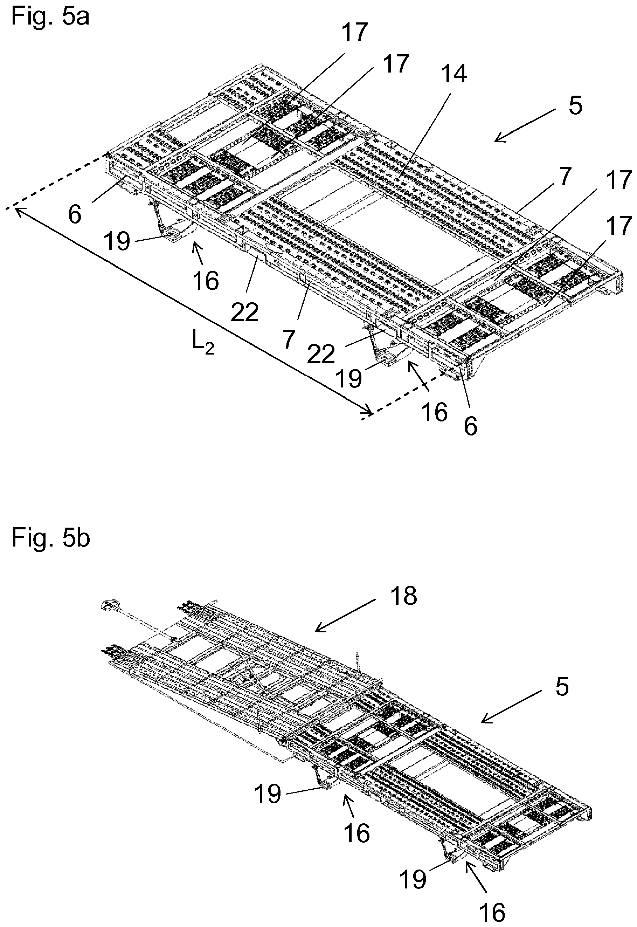

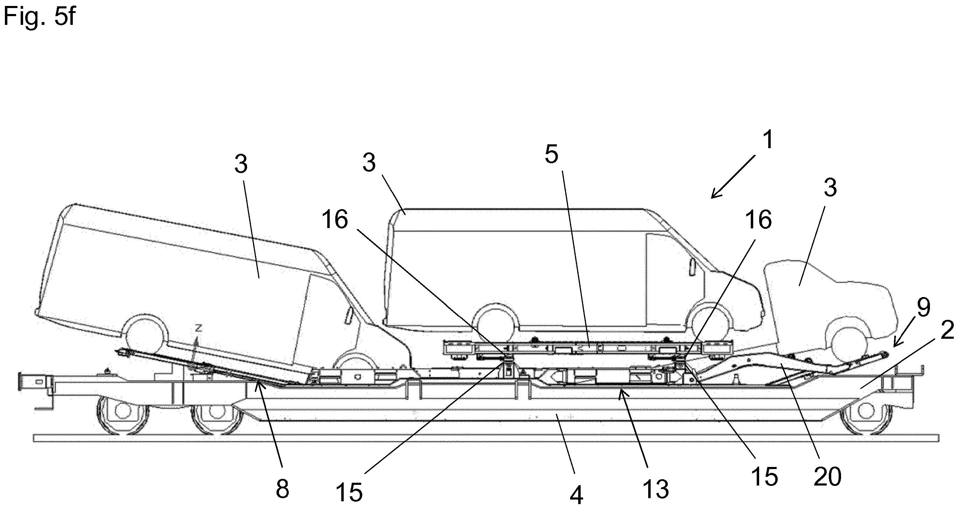

Beim zweiten Ausführungsbeispiel der Fig. 2 weist die erste Abstützung 4 zwei neigbare Teilbereiche 8, 9 auf, welche zwischen einer Aufnahmeposition für jeweils ein Fahrzeug 3, bei der das Fahrzeug 3 im Wesentlichen horizontal ausgerichtet ist und einer Verladeposition für das Fahrzeug 3, in welcher das Fahrzeug 3 geneigt ist, bewegbar sind (siehe beispielsweise Fig. 5f). Die neigbaren Teilbereiche 8, 9 sind - ggf. bis auf eine Einwirkung einer Dämpfvorrichtung - frei schwenkbar an einem Rahmen oder Längsträgern 7 der ersten Abstützung 4 gelagert (vgl. Fig. 5a). In diesem Ausführungsbeispiel kann die erste Abstützung 4 grundsätzlich mit mehr Fahrzeugen 3 beladen werden als die zweite Abstützung 5. Beispielsweise können die erste Abstützung 4 mit zwei Fahrzeugen 3 und die zweite Abstützung 5 mit einem Fahrzeug 3 beladen sein.

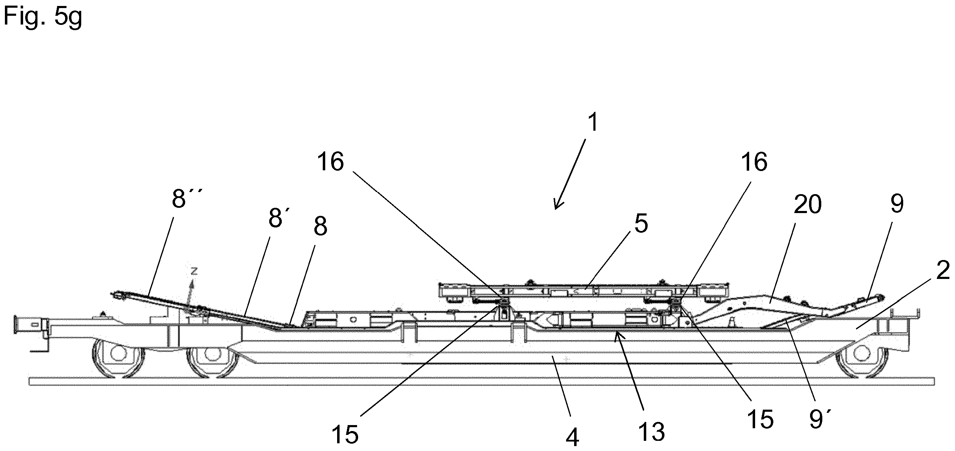

Die zweite Abstützung 5 erstreckt sich in Längserstreckung nur über einen Teil der ersten Abstützung 4 und ist in Form eines Plateaus mit fester (hier zumindest im Wesentlichen horizontaler) Ausrichtung ausgebildet, welches sich über Koppelstellen 15, 16 an der ersten Abstützung 4 abstützt. Zumindest einer der neigbaren Teilbereiche 8, 9 der ersten Abstützung 4 kann sich im geneigten Zustand unter die zweite Abstützung 5 erstrecken. Die neigbaren Teilbereiche 8, 9 der ersten Abstützung 4 erstrecken sich im dargestellten, auf einen Taschenwagen 2 gehobenen Zustand, über die Tasche 13 des Taschenwagens 2 hinaus. Die zweite Abstützung 5 befindet sich in ihrer Längserstreckung innerhalb der Tasche 13 des Taschenwagens 2. Die Schwenkachsen der Neigung der neigbaren Teilbereiche 8, 9 befinden sich hier innerhalb der Tasche 13 des Taschenwagens 2, könnten sich aber auch alternativ außerhalb und oberhalb der Tasche 13 befinden (vgl. den neigbaren Teilbereich 9 in Fig. 5f und 5g).

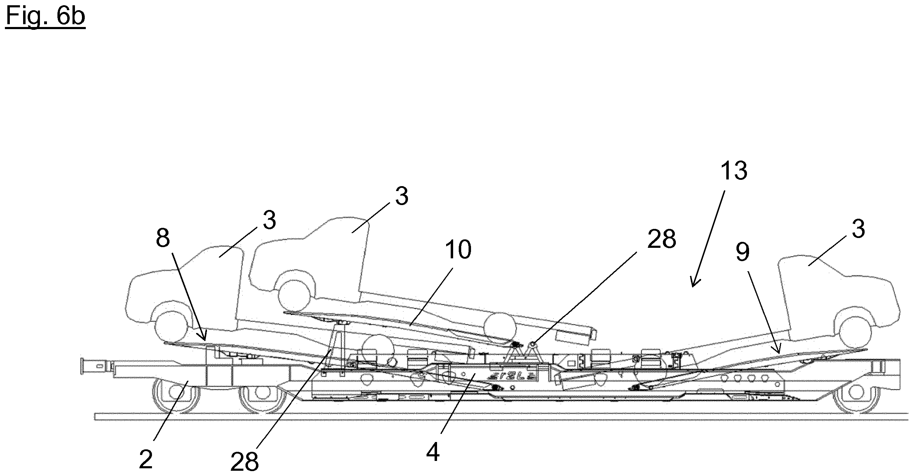

Beim dritten Ausführungsbeispiel der Fig. 3 weist die erste Abstützung 4 zwei neigbare Teilbereiche 8, 9 auf, welche jeweils zwischen einer Aufnahmeposition für jeweils ein Fahrzeug 3, bei der das Fahrzeug 3 im Wesentlichen horizontal ausgerichtet ist und einer Verladeposition für das Fahrzeug 3, in welcher das Fahrzeug 3 geneigt ist, bewegbar sind. Die neigbaren Teilbereiche 8, 9 sind - ggf. bis auf eine Einwirkung einer Dämpfvorrichtung - frei schwenkbar an einem Rahmen oder Längsträgern 7 der ersten Abstützung 4 gelagert. Die zweite Abstützung 5 weist einen Teilbereich 10 mit vor dem Beladen vorgegebener Neigung auf, sodass unterhalb des Teilbereichs 10 mehr Höhe zur Verfügung steht (vgl. Fig. 6b).

Die neigbaren Teilbereiche 8, 9 der ersten Abstützung 4 erstrecken sich im dargestellten, auf einen Taschenwagen 2 gehobenen Zustand, über die Tasche 13 des Taschenwagens 2 hinaus. Die Schwenkachsen der Neigung der neigbaren Teilbereiche 8, 9 befinden sich innerhalb der Tasche 13 des Taschenwagens 2, könnten sich aber auch alternativ außerhalb und oberhalb der Tasche 13 befinden (vgl. den neigbaren Teilbereich 9 in Fig. 5f und 5g).

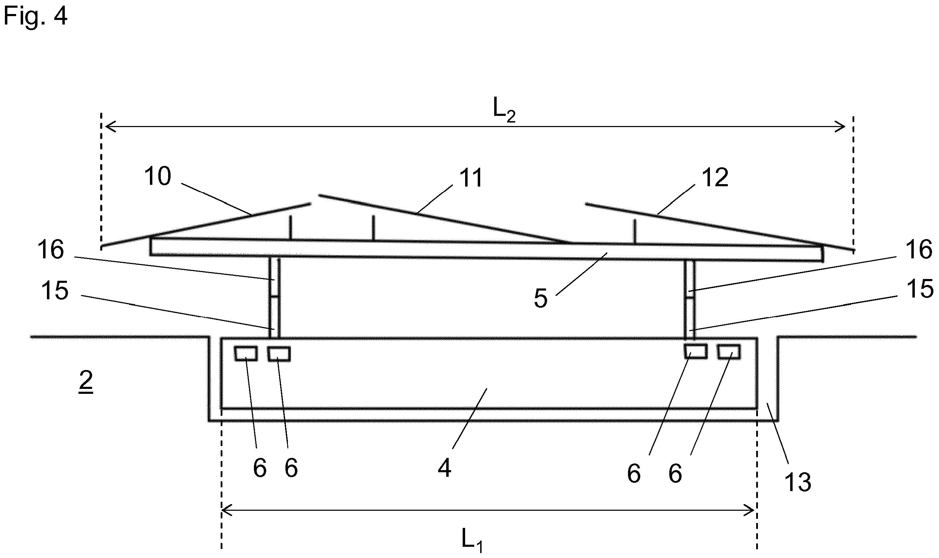

Beim vierten Ausführungsbeispiel der Fig. 4 ist die Länge L₂, über die sich die zweite Abstützung 5 erstreckt, größer als die Länge L₁, über die sich die erste Abstützung 4 erstreckt und weist die erste Abstützung 4 einen Bereich mit fester (hier zumindest im Wesentlichen horizontaler Ausrichtung) auf und weist die zweite Abstützung 5 drei Teilbereiche 10, 11, 12 mit vor dem Beladen vorgebbarer Neigung auf. Die erste Abstützung 4 befindet sich in ihrer Längserstreckung innerhalb der Tasche 13 des Taschenwagens 2. In diesem Ausführungsbeispiel kann die zweite Abstützung 5 grundsätzlich mit mehr Fahrzeugen 3 beladen werden als die erste Abstützung 4. Beispielsweise können die erste Abstützung 4 mit zwei Fahrzeugen 3 und die zweite Abstützung 5 mit drei Fahrzeugen 3 beladen sein.

Die beiden äußeren geneigten Teilbereiche 10, 12 der zweiten Abstützung 5 erstrecken sich im dargestellten, auf einen Taschenwagen 2 gehobenen Zustand, über die Tasche 13 des Taschenwagens 2 hinaus, der mittlere geneigte Teilbereich 11 befindet sich oberhalb der Tasche 13 des Taschenwagens 2.

Fig. 5a-d zeigen zweite Abstützungen 5 eines weiteren Ausführungsbeispiels einer erfindungsgemäßen Tragvorrichtung 1.

Im Ausführungsbeispiel der Fig. 5a weist die zweite Abstützung 5 zwei Längsträger 7 auf, zwischen denen eine Fahrbahn 14 für Fahrzeuge 3 in Form einer Kombination (in Längserstreckung) aus Trägern und Streben angeordnet ist. Die Längsträger 7 sind über Querstreben 17 miteinander verbunden. An beiden Seiten der zweiten Abstützung 5 sind je zwei Koppelstellen 16 angeordnet, über welche die zweite Abstützung 5 lösbar mit einer ersten Abstützung 4 verbindbar ist (über Koppelstellen 15). Es sind Aufnahmetaschen 6 für eine Hubvorrichtung vorgesehen, sodass die zweite Abstützung 5 durch eine Hubvorrichtung hebbar ist. Es sind weiters Gabeltaschen 22 für einen Hubstapler vorgesehen.

Wie Fig. 5b zeigt, kann an die zweite Abstützung 5, welche an ihrer Unterseite Aufstandsflächen (in diesem Ausführungsbeispiel durch die Stützfüße 19 der Koppelstelle 16 gebildet) zum Aufstehen auf einem Terminalflur aufweist, eine Auffahrrampe 18 gestellt werden, um das Auf- oder Abfahren eines Fahrzeuges 3 zu erleichtern. Dies gilt natürlich für alle Ausführungsbeispiele.

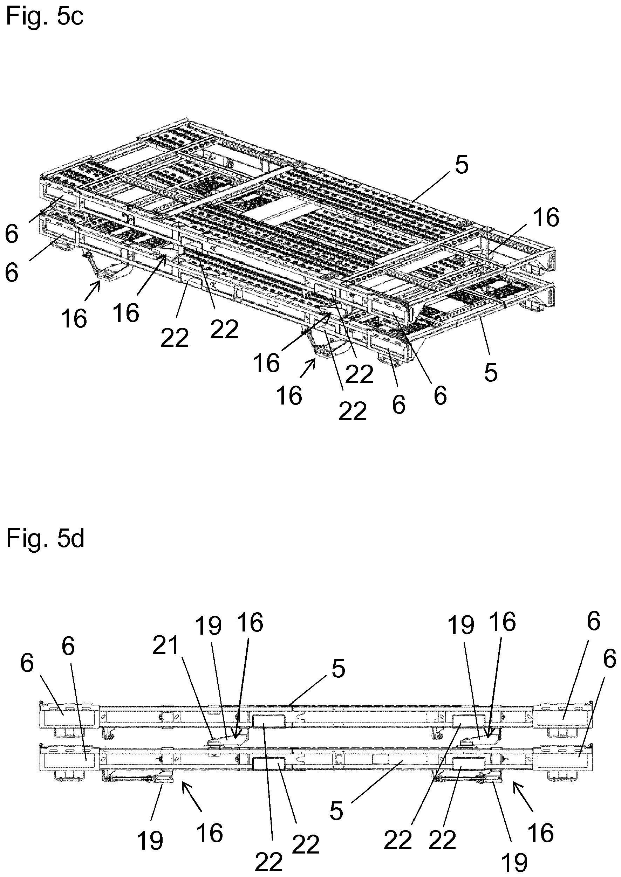

Über die Koppelstellen 16 können mehrere zweite Abstützungen 5 für einen Leertransport aufeinandergestapelt (vgl. Fig. 5c und 5d) und in diesem Zustand über eine erste Abstützung 4 oder unmittelbar an einem Taschenwagen 2 gelagert werden.

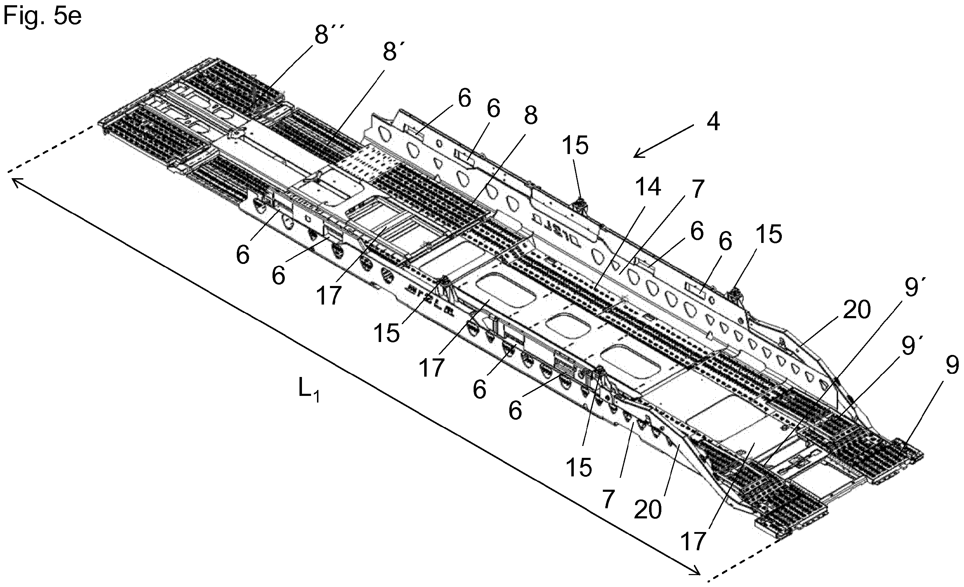

Fig. 5e zeigt eine erste Abstützung 4 eines Ausführungsbeispiels einer erfindungsgemäßen Tragvorrichtung 1. Im Ausführungsbeispiel der Fig. 5e weist die erste Abstützung 4 zwei Längsträger 7 auf, zwischen denen eine Fahrbahn 14 für Fahrzeuge 3 in Form einer Kombination (in Längserstreckung) aus Trägern und Streben angeordnet ist. Die Längsträger 7 sind über Querstreben 17 miteinander verbunden. An beiden Seiten der ersten Abstützung 4 sind je zwei Koppelstellen 15 angeordnet, über welche die erste Abstützung 4 lösbar mit einer zweiten Abstützung 5 verbindbar ist. Es sind Aufnahmetaschen 6 für eine Hubvorrichtung vorgesehen, sodass die erste Abstützung 4 hebbar ist. Die Fahrbahn 14 ist teilweise an zwei neigbaren Teilbereichen 8, 9 ausgebildet, welche zwischen einer Aufnahmeposition für jeweils ein Fahrzeug 3, bei der das Fahrzeug 3 im Wesentlichen horizontal ausgerichtet ist und einer Verladeposition für das Fahrzeug 3, in welcher das Fahrzeug 3 geneigt ist, bewegbar sind (dargestellt ist jeweils die Aufnahmeposition). Die neigbaren Teilbereiche 8, 9 sind - ggf. bis auf eine Einwirkung einer Dämpfvorrichtung - frei schwenkbar gelagert. Zwischen den zwei neigbaren Teilbereichen 8, 9 ist ein weiterer befahrbarer Teilbereich mit fester (hier im Wesentlichen horizontaler) Ausrichtung angeordnet.

Der eine neigbare Teilbereich 9 ist über schwenkbar gelagerte Arme 20 an der ersten Abstützung 4 angeordnet. Die Arme 20 sind außerhalb der befahrbaren Breite der Fahrbahn 14 an Schwenklagern angeordnet. Im vorliegenden Ausführungsbeispiel befinden sich die Schwenklager teilweise innerhalb eines profilierten Abschnitts der Längsträger 7 und teilweise an den Außenseiten der Längsträger 7.

Eine Länge der Arme 20 ist so gewählt, dass der zwischen den neigbaren Teilbereichen 9, 10 angeordnete weitere Teilbereich in der dargestellten ersten Schwenkstellung der Arme 20 durch den neigbaren Teilbereich 9 in befahrbarer Weise verlängert ist. Der neigbare Teilbereich 9 ist durch eine Verlängerung 9' in Richtung des weiteren Teilbereichs verlängerbar.

Für den neigbaren Teilbereich 8 ist es vorteilhaft, wenn er wie dargestellt längenveränderbar ausgebildet ist. Die Längenveränderbarkeit ist beim dargestellten Ausführungsbeispiel durch zwei ineinander verschachtelte, teleskopisch ausziehbare Ausschubteile 8', 8" realisiert.

Fig. 5f zeigt eine Tragvorrichtung 1 des Ausführungsbeispiels der Fig. 2 mit Fahrzeugen 3 im beladenen Zustand auf einem Taschenwagen 2 unter Verwendung der ersten und zweiten Abstützungen 4, 5 nach Fig. 5a und 5e. Es ist erkennbar, dass sich die zweite Abstützung 5 in Längserstreckung nur über einen Teil der ersten Abstützung 4 erstreckt und in Form eines Plateaus mit fester (hier zumindest im Wesentlichen horizontaler) Ausrichtung ausgebildet ist, welches sich über die Koppelstellen 15, 16 an der ersten Abstützung 4 abstützt. Die neigbaren Teilbereiche 8, 9 der ersten Abstützung 4 erstrecken sich im dargestellten, auf einen Taschenwagen 2 gehobenen Zustand, über die Tasche 13 des Taschenwagens 2 hinaus. Die zweite Abstützung 5 befindet sich in Draufsicht innerhalb der Tasche 13 des Taschenwagens 2. Die Schwenkachsen der Neigung der neigbaren Teilbereiche 8, 9 befinden sich innerhalb der Tasche 13 des Taschenwagens 2. Die auf der ersten Abstützung 4 angeordneten Fahrzeuge 3 ragen unter das auf der zweiten Abstützung 5 angeordnete Fahrzeug 3 hinein.

Fig. 5g zeigt die Tragvorrichtung 1 nach Fig. 5f ohne Fahrzeuge 3 auf einem Taschenwagen 2.

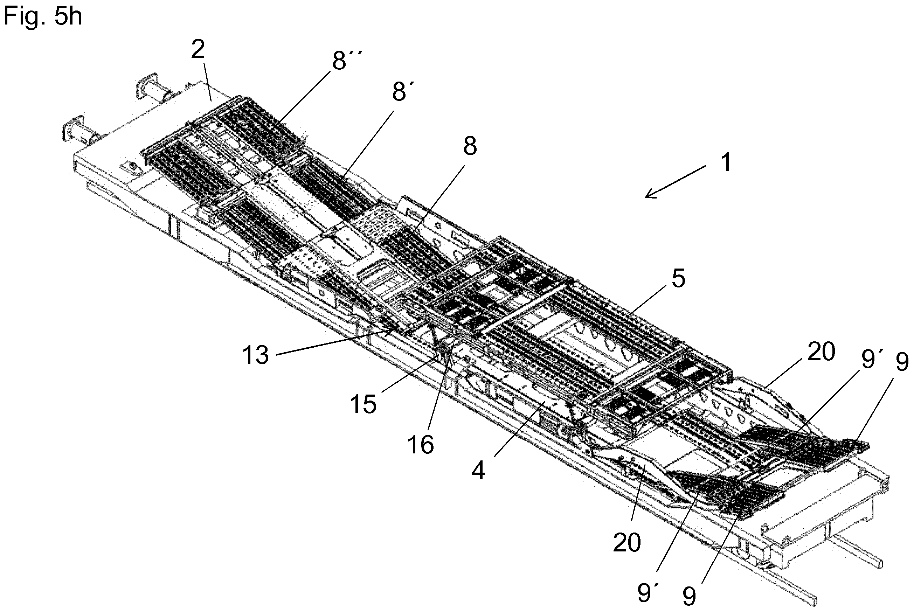

Fig. 5h zeigt eine perspektivische Ansicht zur Fig. 5g.

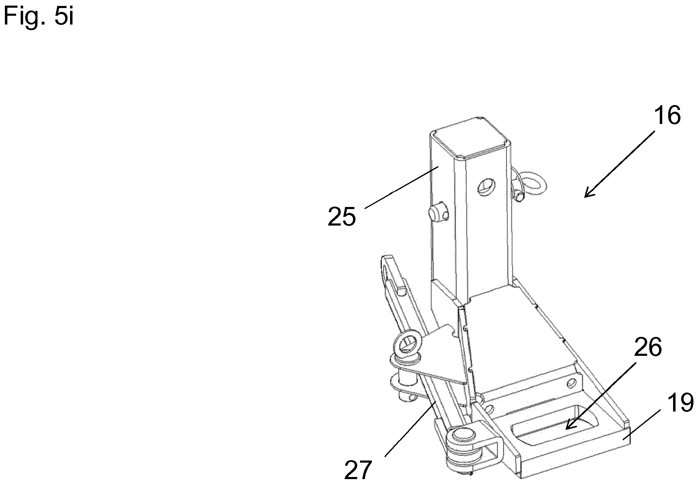

Fig. 5i-k zeigen ein Ausführungsbeispiel einer Koppelstelle 16 der zweiten Abstützung 5, bei welchem die Koppelstelle 16 einen Stützfuß 19 aufweist, welcher an einem Bein 25 angeordnet ist. Der Stützfuß 19 weist eine Aufnahmeöffnung 26 auf, welcher zur Aufnahme eines Vorsprungs einer Koppelstelle 15 der ersten Abstützung 4 dienen kann. Wie in Fig. 5c und 5d gezeigt, kann die Aufnahmeöffnung 26 auch zur Koppelung mit einer weiteren zweiten Abstützung 5 verwendet werden.

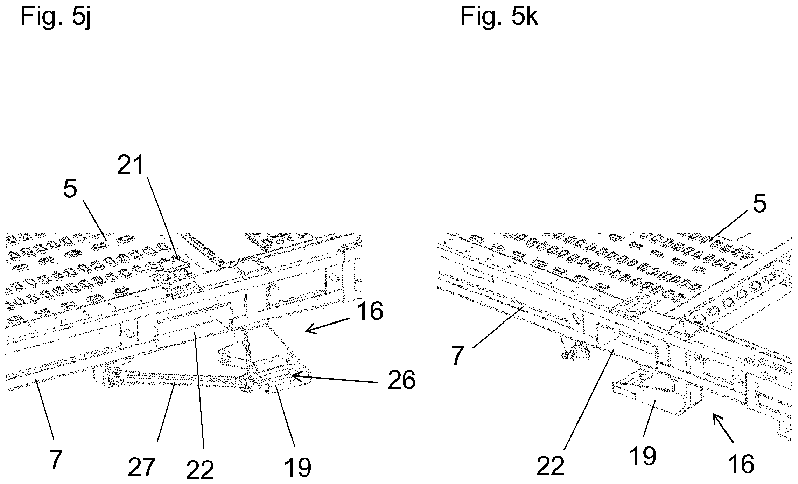

Die Koppelstelle 16 weist eine Verstrebung 27 auf, welche dazu dient, im verstrebten Zustand (vgl. Fig. 5j) im Fahrbetrieb des Taschenwagens 2 dynamische Kräfte in die zweite Abstützung 5 einzuleiten. So können beispielsweise auf das Bein 25 wirkende Torsionskräfte verringert werden.

Wie aus einem Vergleich der Fig. 5j und 5k hervor geht, können das Bein 25 und damit der Stützfuß 19 in verschiedenen Ausrichtungen an der zweiten Abstützung 5 angeordnet werden (z. B. durch Einstecken in der gewünschten Ausrichtung in eine Aufnahme). In der in Fig. 5j gezeigten Ausrichtung eignet sich die Koppelstelle 16 zur Verbindung der zweiten Abstützung 5 mit einer Koppelstelle 15 der ersten Abstützung 4. In der in Fig. 5k gezeigten Ausrichtung eignet sich die Koppelstelle 16 zur Verbindung der zweiten Abstützung 5 mit einer weiteren zweiten Abstützung 5, beispielsweise über eine wie in Fig. 5j dargestellte Twist-Lock-Verbindung 21 (siehe auch Fig. 5d).

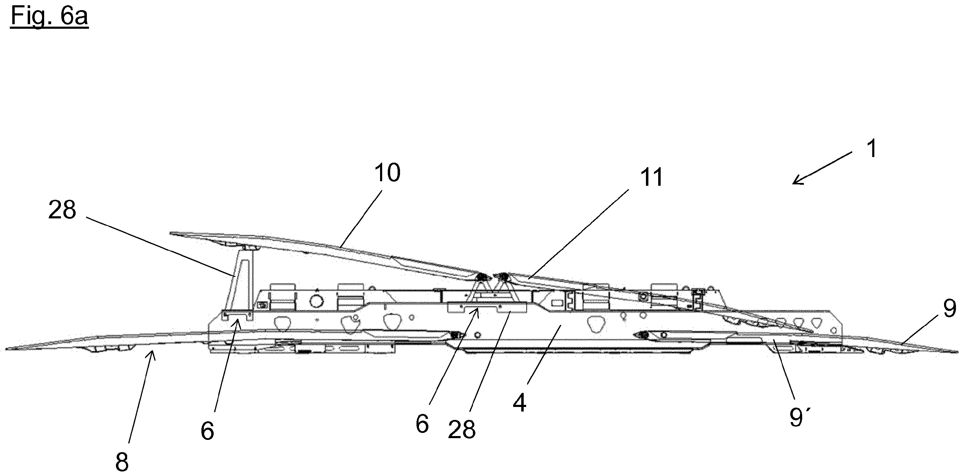

Fig. 6a zeigt eine zweite Abstützung 5 eines Ausführungsbeispiels einer erfindungsgemäßen Tragvorrichtung 1. Im Unterschied zu der zweiten Abstützung 5 der Fig. 5a weist die zweite Abstützung 5 zwei Teilbereiche 10, 11 mit vor dem Beladen wählbarer und im beladenen Zustand fester Neigung auf. Die Neigung des Teilbereichs 10 ist beispielsweise durch Auswahl der Höhe der Unterstützungen 28 vorgegeben, welche an der zweiten Abstützung 5 angeordnet sind (in Fig. 6a ist die eine Unterstützung 28 durch die sichtbare Unterstützung 28 verdeckt). Ansonsten kann die zweite Abstützung 5 so ausgebildet sein, wie in den Fig. 5a - 5d gezeigt. In dem in Fig. 6a gezeigten Zustand kann der Teilbereich 11 in Verbindung mit dem Teilbereich 9 der ersten Abstützung 4 als Auffahrrampe für ein Fahrzeug 3 zum Erreichen des Teilbereichs 10 dienen. Danach kann der Teilbereich 11 entfernt werden. Für ein Entladen kann der Teilbereich 11 wieder verwendet werden.

Fig. 6b zeigt eine Tragvorrichtung 1 mit Fahrzeugen 3 im beladenen Zustand auf einem Taschenwagen 2 unter Verwendung der ersten und zweiten Abstützungen 4, 5 nach Fig. 5e und 6a, wobei der Teilbereich 11 der zweiten Abstützung 5 entfernt wurde.

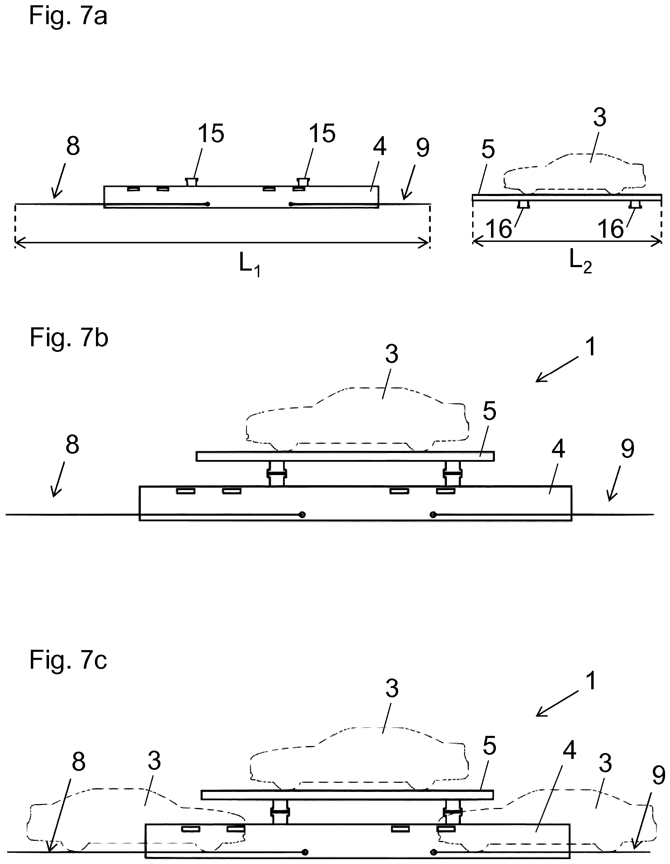

In der Sequenz der Fig. 7a-c ist ein erstes Ausführungsbeispiel eines Verfahrens zum Beladen eines Taschenwagens 2 unter Verwendung von ersten und zweiten Abstützungen 4, 5, aus welchen eine erfindungsgemäße Tragvorrichtung 1 gebildet wird, dargestellt.

In der gezeigten Ausführung ist die Länge L₁, über welche sich die erste Abstützung 4 erstreckt (die neigbaren Abstützungen 8, 9 der ersten Abstützung 4 befinden sich in der Aufnahmeposition), größer als die Länge L₂, über welche sich die zweite Abstützung 5 erstreckt. Das gezeigte Ausführungsbeispiel bedient sich beispielhaft eines Ausführungsbeispiels einer Tragvorrichtung 1 nach Fig. 2.

In Fig. 7a ist bereits ein Fahrzeug 3 auf die zweite Abstützung 5 aufgefahren (worden). In diesem Zustand wird nun die zweite Abstützung 5 mittels der Aufnahmestellen durch eine nicht dargestellte Hubvorrichtung auf die noch unbeladene erste Abstützung 4 gehoben, sodass sich der Zustand nach Fig. 7b ergibt, in welchem die erste und die zweite Abstützung 4, 5 gemeinsam eine erfindungsgemäße Tragvorrichtung 1 bilden.

In Fig. 7c ist der Zustand gezeigt, welcher sich ergibt, wenn zwei Fahrzeuge 3 auf die erste Abstützung 4 aufgefahren (worden) sind. Nunmehr kann die beladene Tragvorrichtung 1 mittels der Aufnahmestellen der ersten Abstützung 4 durch einen nicht dargestellte Hubvorrichtung auf einen nicht dargestellten Taschenwagen 2 gehoben werden.

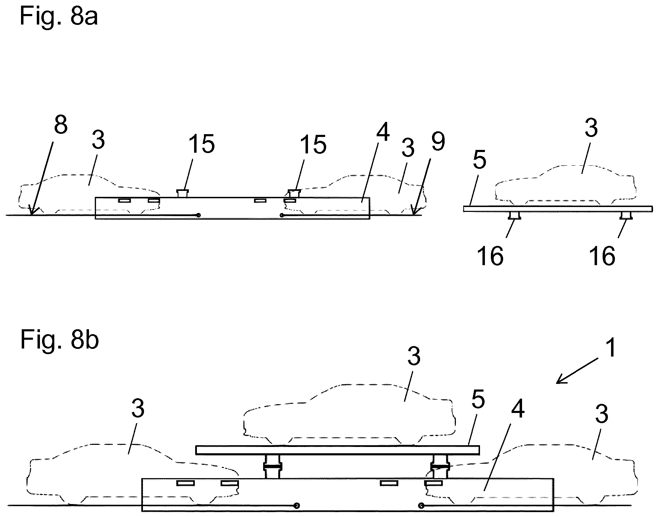

In der Sequenz der Fig. 8a,b ist ein alternatives, zweites Ausführungsbeispiel eines Verfahrens zum Beladen eines Taschenwagens 2 unter Verwendung einer erfindungsgemäßen Tragvorrichtung 1 dargestellt. Der einzige Unterschied zu dem in der Fig. 7 gezeigten Verfahren besteht darin, dass hier die erste Abstützung 4 und die zweite Abstützung 5 unabhängig voneinander, in einem auf dem Terminalflur aufgestellten Zustand, mit Fahrzeugen 3 beladen werden. In Fig. 8a ist der Zustand gezeigt, welcher sich ergibt, wenn zwei Fahrzeuge 3 auf die erste Abstützung 4 aufgefahren (worden) sind und ein Fahrzeug 3 auf die zweite Abstützung 5 aufgefahren (worden) ist.

In diesem Zustand wird nun die zweite Abstützung 5 mittels der Aufnahmestellen durch eine nicht dargestellte Hubvorrichtung auf die bereits beladene erste Abstützung 4 gehoben, sodass sich der Zustand nach Fig. 8b ergibt, in welchem die erste und die zweite Abstützung 4, 5 gemeinsam eine erfindungsgemäße Tragvorrichtung 1 bilden und die beladene Tragvorrichtung 1 mittels der Aufnahmestellen der ersten Abstützung 4 durch einen nicht dargestellte Hubvorrichtung auf einen nicht dargestellten Taschenwagen 2 gehoben werden kann.

### Bezugszeichenliste:

- 1: hebbare Tragvorrichtung
- 2: Taschenwagen
- 3: Fahrzeug
- 4: erste Abstützung
- 5: zweite Abstützung
- 6: Aufnahmetasche für Hubvorrichtung (z. B. Kran)
- 7: Längsträger
- 8: neigbarer Teilbereich der ersten Abstützung
- 8': Ausschub eines neigbaren Teilbereichs der ersten Abstützung
- 8": Ausschub eines neigbaren Teilbereichs der ersten Abstützung
- 9: neigbarer Teilbereich einer Abstützung der ersten Abstützung
- 9': Verlängerung eines neigbaren Teilbereichs der ersten Abstützung
- 10: neigbarer Teilbereich der zweiten Abstützung
- 11: neigbarer Teilbereich der zweiten Abstützung
- 12: neigbarer Teilbereich der zweiten Abstützung
- 13: Tasche des Taschenwagens
- 14: Fahrbahn
- 15: Koppelstelle der ersten Abstützung
- 16: Koppelstelle der zweiten Abstützung
- 17: Querstrebe
- 18: Auffahrrampe
- 19: Stützfüße der Koppelstelle der zweiten Abstützung
- 20: Arme der ersten Abstützung
- 21: Twist-Lock-Verbindung
- 22: Gabeltaschen
- 23: Abschnitt der ersten Abstützung
- 24: ISO-Zapfen des Taschenwagens
- 25: Bein der Koppelstelle der zweiten Abstützung
- 26: Aufnahmeöffnung im Bein der Koppelstelle der zweiten Abstützung
- 27: Verstrebung
- 28: Unterstützung für Teilbereich mit vorgebbarer Neigung

- L₁: Länge der ersten Abstützung
- L₂: Länge der zweiten Abstützung

## Patentansprüche

1. Taschenwagen (2) mit einer hebbaren Tragvorrichtung (1) für das Beladen des Taschenwagens (2) mit Fahrzeugen (3) durch eine Hubvorrichtung, die Tragvorrichtung umfassend:
- eine sich über eine Länge (L₁) erstreckende erste Abstützung (4) für wenigstens ein Fahrzeug (3),
- wenigstens eine oberhalb der ersten Abstützung (4) angeordnete zweite Abstützung (5) für wenigstens ein Fahrzeug (3), welche sich über eine Länge (L2) erstreckt,
- an der ersten und der wenigstens einen zweiten Abstützung (4, 5) angeordneten Aufnahmestellen, insbesondere Aufnahmetaschen (6), für eine Hubvorrichtung,
wobei sich die Länge (L₁), über die sich die erste Abstützung (4) erstreckt und die Länge (L₂), über die sich die wenigstens eine zweite Abstützung (5) erstreckt, voneinander unterscheiden, **dadurch gekennzeichnet, dass** die erste und die wenigstens eine zweite Abstützung (4, 5) für ein gemeinsames Heben durch eine Hubvorrichtung lösbar miteinander verbindbar oder verbunden sind, wobei die erste Abstützung (4) zumindest teilweise in eine Tasche (13) des Taschenwagens (2) hineinragt und wobei entweder
- die Länge (L2), über die sich die wenigstens eine zweite Abstützung (5) erstreckt, größer ist als die Länge (L1), über die sich die erste Abstützung (4) erstreckt und sich die wenigstens eine zweite Abstützung (5) in einem auf den Taschenwagen (2) gehobenen Zustand über eine Tasche (13) des Taschenwagens (2) hinausragt und sich die erste Abstützung (4) in ihrer Längserstreckung innerhalb der Tasche (13) des Taschenwagens (2) befindet
oder
- die Länge (L1), über die sich die erste Abstützung (4) erstreckt, größer ist als die Länge (L2), über die sich die wenigstens eine zweite Abstützung (5) erstreckt, wobei die erste Abstützung (4) zwei neigbare Teilbereiche (8, 9) aufweist, welche zwischen einer Aufnahmeposition für jeweils ein Fahrzeug (3), bei der das Fahrzeug (3) im Wesentlichen horizontal oder geneigt ausgerichtet ist und einer Verladeposition für das Fahrzeug (3), in welcher das Fahrzeug (3) geneigt ist, bewegbar sind, und zumindest einer der neigbaren Teilbereiche (8, 9) der ersten Abstützung (4) sich im geneigten Zustand unter die zweite Abstützung (5) erstreckt und sich die neigbaren Teilbereiche (8, 9) der ersten Abstützung (4) in einem auf einen Taschenwagen (2) gehobenen Zustand über die Tasche (13) des Taschenwagens (2) hinaus erstrecken.

2. Taschenwagen mit einer hebbaren Tragvorrichtung (1) nach dem vorangehenden Anspruch, wobei die erste Abstützung (4) zwischen zwei Längsträgern (7) oder in einem Tragrahmen angeordnet ist und/oder die wenigstens eine zweite Abstützung (5) zwischen zwei Längsträgern (7) oder in einem Tragrahmen angeordnet ist.

3. Taschenwagen mit einer hebbaren Tragvorrichtung (1) nach wenigstens einem der vorangehenden Ansprüche, wobei die erste und die wenigstens eine zweite Abstützung (4, 5) jeweils Aufstandsflächen zum unmittelbaren Aufstellen auf einem Terminalflur aufweisen und die erste und die wenigstens eine zweite Abstützung (4, 5) jeweils im aufgestellten Zustand auf dem Terminalflur unabhängig voneinander befahrbar sind.

4. Taschenwagen mit einer hebbaren Tragvorrichtung (1) nach wenigstens einem der vorangehenden Ansprüche, wobei die zweite Abstützung (5) in ihrem mit der ersten Abstützung (4) verbundenen Zustand durch die erste Abstützung (4) getragen ist, wobei vorzugsweise Koppelstellen (15, 16) vorgesehen sind, über welche die wenigstens eine zweite Abstützung (5) mit der ersten Abstützung (4) lösbar verbindbar oder verbunden ist.

5. Taschenwagen mit einer hebbaren Tragvorrichtung (1) nach dem vorangehenden Anspruch, wobei die Koppelstellen (15, 16) durch einen Twist-Lock (21) verbindbar oder verbunden sind.

6. Taschenwagen mit einer hebbaren Tragvorrichtung (1) nach wenigstens einem der vorangehenden Ansprüche, wobei wenigstens ein Teilbereich (8, 9, 10, 11, 12) der ersten und/oder der wenigstens eine zweiten Abstützung (4, 5) zwischen einer Aufnahmeposition für ein Fahrzeug (3), bei der das Fahrzeug (3) im Wesentlichen horizontal oder geneigt ausgerichtet ist und einer Verladeposition für das Fahrzeug (3), in welcher das Fahrzeug (3) geneigt ist, bewegbar ist.

7. Taschenwagen mit einer hebbaren Tragvorrichtung (1) nach dem vorangehenden Anspruch, wobei der wenigstens eine neigbare Teilbereich (8, 9, 10, 11, 12) - ggf. bis auf eine Einwirkung einer Dämpfvorrichtung - frei schwenkbar an einem Tragrahmen oder Längsträgern (7) der ersten bzw. zweiten Abstützung (4, 5) gelagert ist.

8. Taschenwagen mit einer hebbaren Tragvorrichtung (1) nach Anspruch 6 oder 7, wobei die erste Abstützung (4) zwei neigbare Teilbereiche (8, 9) aufweist.

9. Taschenwagen mit einer hebbaren Tragvorrichtung (1) nach dem vorangehenden Anspruch, wobei sich der wenigstens eine neigbare Teilbereich (10, 11, 12) der wenigstens einen zweiten Abstützung (5) im mit der ersten Abstützung (4) verbundenen Zustand der wenigstens einen zweiten Abstützung (5) in der Verladeposition an der ersten Abstützung (4) oder einem Taschenwagen (2) abstützt.

10. Taschenwagen mit einer hebbaren Tragvorrichtung (1) nach wenigstens einem der vorangehenden Ansprüche, wobei wenigstens ein Teilbereich (8, 9, 10, 11, 12) der ersten und/oder der wenigstens eine zweiten Abstützung (4, 5) mit einer horizontalen oder geneigten Ausrichtung ausgebildet ist, wobei bevorzugt vorgesehen ist, dass eine Neigung des wenigstens einen Teilbereichs vor einem Beladen vorgebbar ist.

11. Taschenwagen mit einer hebbaren Tragvorrichtung (1) nach dem vorangehenden Anspruch, wobei die zweite Abstützung (5) wenigstens einen Teilbereich (10, 11, 12) mit vorgegebener Neigung aufweist.

12. Verfahren zum Beladen eines Taschenwagens (2) mittels einer mit wenigstens drei Fahrzeugen (3) beladenen Tragvorrichtung (1), insbesondere unter Verwendung einer Tragvorrichtung (1) nach einem der Ansprüche 1 bis 11, wobei zumindest eines der wenigstens drei Fahrzeuge (3) auf dem Taschenwagen (2) in einer größeren Höhe angeordnet wird als zumindest ein anderes der wenigstens drei Fahrzeuge (3), **dadurch gekennzeichnet, dass** das Verfahren zumindest die folgenden Schritte aufweist:
- Bereitstellen einer ersten und wenigstens einer zweiten Abstützung (4, 5) auf einem Terminalflur, wobei die erste und die wenigstens eine zweite Abstützung (4, 5) unabhängig voneinander auf dem Terminalflur aufstehen,
- Beladen der wenigstens einen zweiten Abstützung (5) und ggf. der ersten Abstützung (4) mit den zu ladenden Fahrzeugen (3), durch Auffahren der Fahrzeuge (3) auf die erste und/oder wenigstens eine zweite Abstützung (4, 5),
- Abstellen der beladenen wenigstens einen zweiten Abstützung (5) auf die erste Abstützung (4) vor dem Anheben auf den Taschenwagen (2) zur Bildung einer als Einheit hebbaren Tragvorrichtung (1),
- ggf. Beladen der ersten Abstützung (4) - falls diese nicht bereits vollständig beladen wurde - durch Auffahren des Fahrzeuges oder der Fahrzeuge,
- Heben der Tragvorrichtung (1) als Einheit mittels einer Hubvorrichtung auf den Taschenwagen (2) so, dass die wenigstens eine zweite Abstützung (5) oberhalb der ersten Abstützung (4) angeordnet ist und die erste Abstützung (4) zumindest teilweise in eine Tasche (13) des Taschenwagens (2) hineinragt.

13. Verfahren zum Entladen eines mittels einer Tragvorrichtung (1) mit wenigstens drei Fahrzeugen (3) beladenen Taschenwagens (2), insbesondere unter Verwendung einer Tragvorrichtung (1) nach einem der Ansprüche 1 bis 11, wobei zumindest eines der wenigstens drei Fahrzeuge (3) auf einer ersten Abstützung (4) der Tragvorrichtung (1) und zumindest eines der wenigstens drei Fahrzeuge (3) auf wenigstens einer zweiten Abstützung (5) der Tragvorrichtung (1) angeordnet sind, wobei die wenigstens eine zweite Abstützung (5) auf der ersten Abstützung (4) abgestellt ist und die erste Abstützung (4) in einer Tasche (13) des Taschenwagens (2) angeordnet ist, **dadurch gekennzeichnet, dass** das Verfahren zumindest die folgenden Schritte aufweist:
- Wegheben der Tragvorrichtung (1) als Einheit mittels einer Hubvorrichtung vom Taschenwagen (2) und Abstellen auf einem Terminalflur,
- ggf. Entladen der ersten Abstützung (4) durch Abfahren der Fahrzeuge (3) von der ersten Abstützung (4),
- Wegheben der wenigstens einen zweiten Abstützung (5) von der ersten Abstützung (4) und Abstellen der wenigstens einen zweiten Abstützung (5) auf einem Terminalflur,
- Entladen der wenigstens einen zweiten Abstützung (5) und ggf. der ersten Abstützung (4) durch Abfahren der Fahrzeuge (3) von der ersten und wenigstens einen zweiten Abstützung (4, 5).

## Claims

1. A pocket wagon (2) with a liftable carrying apparatus (1) for loading the pocket wagon (2) with vehicles (3) by a lifting apparatus, the carrying apparatus comprising:
- a first support means (4) for at least one vehicle (3) that extends over a length (L₁),
- at least one second support means (5) for at least one vehicle (3) that is arranged above the first support means (4) and extends over a length (L₂),
- receiving locations that are arranged at the first and the at least one second support means (4, 5), in particular receiving pockets (6), for a lifting apparatus,
wherein the length (L₁), over which the first support means (4) extends and the length (L₂), over which the at least one second support means (5) extends, differ from each other, **characterised in that** the first and the at least one second support means (4, 5) are or can be releasably connected to each other for joint lifting by a lifting apparatus, wherein the first support means (4) projects at least partially into a pocket (13) of the pocket wagon (2) and wherein either
- the length (L₂) over which the at least one second support means (5) extends is greater than the length (L₁) over which the first support means (4) extends, and the at least one second support means (5), in a state of being lifted onto a pocket wagon (2), projects beyond a pocket (13) of the pocket wagon (2) and the first support means (4) is located in respect of its longitudinal extent within the pocket (13) of the pocket wagon (2)
or
- the length (L₁) over which the first support means (4) extends is greater than the length (L₂) over which the at least one second support means (5) extends, wherein the first support means (4) has two inclinable portions (8, 9) which are moveable between a receiving position for one vehicle (3) each, in which the vehicle (3) is oriented substantially horizontally or inclinedly, and a loading position for the vehicle (3), in which the vehicle (3) is inclined, and at least one of the inclinable portions (8, 9) of the first support means (4) extends in the inclined state below the second support means (5) and the inclinable portions (8, 9) of the first support means (4), in a state of being lifted onto a pocket wagon (2), extend beyond the pocket (13) of the pocket wagon (2).

2. The pocket wagon with a liftable carrying apparatus (1) as set forth in the preceding claim wherein the first support means (4) is arranged between two longitudinal bearers (7) or in a carrying frame and/or the at least one second support means (5) is arranged between two longitudinal bearers (7) or in a carrying frame.

3. The pocket wagon with a liftable carrying apparatus (1) as set forth in at least one of the preceding claims wherein the first and the at least one second support means (4, 5) each have contact surfaces for direct placement on a terminal floor and the first and the at least one second support means (4, 5) can be driven onto independently of each other in the state of placement on the terminal floor.

4. The pocket wagon with a liftable carrying apparatus (1) as set forth in at least one of the preceding claims wherein the second support means (5) in its state of being connected to the first support means (4) is carried by the first support means (4), wherein preferably coupling locations (15, 16) are provided by way of which the at least one second support means (5) is or can be releasably connected to the first support means (4).

5. The pocket wagon with a liftable carrying apparatus (1) as set forth in the preceding claim wherein the coupling locations (15, 16) are or can be connected by a twist lock (21).

6. The pocket wagon with a liftable carrying apparatus (1) as set forth in at least one of the preceding claims wherein at least one portion (8, 9, 10, 11, 12) of the first and/or the at least one second support means (4, 5) is moveable between a receiving position for a vehicle (3), in which the vehicle (3) is oriented substantially horizontally or inclinedly, and a loading position for the vehicle (3), in which the vehicle (3) is inclined.

7. The pocket wagon with a liftable carrying apparatus (1) as set forth in the preceding claim wherein the at least one inclinable portion (8, 9, 10, 11, 12) - except for an impact of a damping device, if applicable - is mounted with the ability to pivot freely - to a carrying frame or longitudinal bearers (7) of the first or, respectively, second support means (4, 5).

8. The pocket wagon with a liftable carrying apparatus (1) as set forth in claim 6 or 7 wherein the first support means (4) has two inclinable portions (8, 9).

9. The pocket wagon with a liftable carrying apparatus (1) as set forth in the preceding claim wherein the at least one inclinable portion (10, 11, 12) of the at least one second support means (5) in the state of the at least one second support means (5) being connected to the first support means (4) is, in the loading position, supported by the first support means (4) or a pocket wagon (2).

10. The pocket wagon with a liftable carrying apparatus (1) as set forth in at least one of the preceding claims wherein at least one portion (8, 9, 10, 11, 12) of the first and/or the at least one second support means (4, 5) is provided with a horizontal or inclined orientation, wherein it is preferably provided that an inclination of the at least one portion can be predetermined prior to a loading operation.

11. The pocket wagon with a liftable carrying apparatus (1) as set forth in the preceding claim wherein the second support means (5) has at least one portion (10, 11, 12) with a predetermined inclination.

12. A method of loading a pocket wagon (2) using a carrying apparatus (1) loaded with at least three vehicles (3), in particular using a carrying apparatus (1) as set forth in one of the claims 1 through 11, wherein at least one of the at least three vehicles (3) is arranged on the pocket wagon (2) at a greater height than at least one other of the at least three vehicles (3), **characterised in that** the method has at least the following steps:
- providing a first and at least one second support means (4, 5) on a terminal floor, wherein the first and the at least one second support means (4, 5) stand independently of each other on the terminal floor,
- loading the at least one second support means (5) and optionally the first support means (4) with the vehicles (3) to be loaded by driving the vehicles (3) onto the first and/or at least one second support means (4, 5),
- placing the loaded at least one second support means (5) on the first support means (4) prior to lifting onto the pocket wagon (2) to form a carrying apparatus (1) liftable as a unit,
- optionally loading the first support means (4) - if same has not already been completely loaded - by driving on the vehicle or the vehicles,
- lifting the carrying apparatus (1) as a unit by means of a lifting apparatus onto the pocket wagon (2) in such way that the at least one second support means (5) is arranged above the first support means (4) and the first support means (4) projects at least partially into a pocket (13) of the pocket wagon (2).

13. A method of unloading a pocket wagon (2) loaded with at least three vehicles (3) by means of a carrying apparatus (1), in particular by using a carrying apparatus (1) as set forth in one of the claims 1 through 11, wherein at least one of the at least three vehicles (3) is arranged on a first support means (4) of the carrying apparatus (1) and at least one of the at least three vehicles (3) is arranged on at least one second support means (5) of the carrying apparatus (1), wherein the at least one second support means (5) is placed on the first support means (4) and the first support means (4) is arranged in a pocket (13) of the pocket wagon (2), **characterised in that** the method comprises at least the following steps:
- lifting off the carrying apparatus (1) as a unit by means of a lifting apparatus from the pocket wagon (2) and putting it down on a terminal floor,
- optionally unloading the first support means (4) by driving the vehicles (3) off the first support means (4),
- lifting off the at least one second support means (5) from the first support means (4) and putting down the at least one second support means (5) on a terminal floor,
- unloading the at least one second support means (5) and optionally the first support means (4) by driving the vehicles (3) off the first and at least one second support means (4, 5).

## Revendications

1. Wagon kangourou (2) avec un dispositif porteur (1) levable pour le chargement du wagon kangourou (2) avec des véhicules (3) par un dispositif de levage, le dispositif porteur comprenant :
- un premier appui (4) s'étendant sur une longueur (L₁) pour au moins un véhicule (3),
- au moins un deuxième appui (5) agencé au-dessus du premier appui (4) pour au moins un véhicule (3) qui s'étend sur une longueur (L2),
- des points de réception agencés au premier et à l'au moins un deuxième appui (4, 5), en particulier des poches de réception (6), pour un dispositif de levage,
dans lequel la longueur (L₁), sur laquelle le premier appui (4) s'étend et la longueur (L₂) sur laquelle l'au moins un deuxième appui (5) s'étend, se distinguent l'une de l'autre, **caractérisé en ce que** le premier et l'au moins un deuxième appui (4, 5) sont ou peuvent être reliés entre eux de manière détachable pour un levage commun par un dispositif de levage, dans lequel le premier appui (4) pénètre au moins partiellement dans une poche (13) du wagon kangourou (2) et dans lequel soit
- la longueur (L2), sur laquelle l'au moins un deuxième appui (5) s'étend, est supérieure à la longueur (L1), sur laquelle le premier appui (4) s'étend et l'au moins un deuxième appui (5) dépasse dans un état levé sur le wagon kangourou (2) au-delà d'une poche (13) du wagon kangourou (2) et le premier appui (4) se trouve dans son étendue longitudinale à l'intérieur de la poche (13) du wagon kangourou (2)
ou
- la longueur (L1), sur laquelle le premier appui (4) s'étend, est supérieure à la longueur (L2), sur laquelle l'au moins un deuxième appui (5) s'étend, dans lequel le premier appui (4) présente deux zones partielles (8, 9) inclinables qui sont mobiles entre une position de réception pour respectivement un véhicule (3), pour laquelle le véhicule (3) est orienté sensiblement horizontalement ou de manière inclinée et une position de chargement pour le véhicule (3), dans laquelle le véhicule (3) est incliné, et au moins une des zones partielles (8, 9) inclinables du premier appui (4) s'étend dans l'état incliné sous le deuxième appui (5) et les zones partielles (8, 9) inclinables du premier appui (4) s'étendent dans un état élevé sur un wagon kangourou (2) au-delà de la poche (13) du wagon kangourou (2).

2. Wagon kangourou avec un dispositif porteur (1) levable selon la revendication précédente, dans lequel le premier appui (4) est agencé entre deux longerons (7) ou dans un cadre porteur et/ou l'au moins un deuxième appui (5) est agencé entre deux longerons (7) ou dans un cadre porteur.

3. Wagon kangourou avec un dispositif porteur (1) levable selon au moins l'une quelconque des revendications précédentes, dans lequel le premier et l'au moins un deuxième appui (4, 5) présentent respectivement des surfaces de contact pour le placement direct sur une rampe d'accès au terminal et le premier et l'au moins un deuxième appui (4, 5) sont praticables indépendamment l'un de l'autre respectivement dans l'état placé sur la rampe d'accès au terminal.

4. Wagon kangourou avec un dispositif porteur (1) levable selon au moins l'une quelconque des revendications précédentes, dans lequel le deuxième appui (5) est porté dans son état relié au premier appui (4) par le premier appui (4), dans lequel de préférence des points de couplage (15, 16) sont prévus, par le biais desquels l'au moins un deuxième appui (5) est ou peut être relié de manière détachable au premier appui (4).

5. Wagon kangourou avec un dispositif porteur (1) levable selon la revendication précédente, dans lequel les points de couplage (15, 16) sont ou peuvent être reliés par un verrou tournant (21).

6. Wagon kangourou avec un dispositif porteur (1) levable selon au moins l'une quelconque des revendications précédentes, dans lequel au moins une zone partielle (8, 9, 10, 11, 12) du premier et/ou de l'au moins un deuxième appui (4, 5) est mobile entre une position de réception pour un véhicule (3), pour laquelle le véhicule (3) est orienté sensiblement horizontalement ou de manière inclinée et une position de chargement pour le véhicule (3), dans laquelle le véhicule (3) est incliné.

7. Wagon kangourou avec un dispositif porteur (1) levable selon la revendication précédente, dans lequel l'au moins une zone partielle (8, 9, 10, 11, 12) inclinable est logée - éventuellement jusqu'à une action d'un dispositif d'amortissement - de manière librement pivotante sur un cadre porteur ou des longerons (7) du premier ou deuxième appui (4, 5).

8. Wagon kangourou avec un dispositif porteur (1) levable selon la revendication 6 ou 7, dans lequel le premier appui (4) présente deux zones partielles (8, 9) inclinables.

9. Wagon kangourou avec un dispositif porteur (1) levable selon la revendication précédente, dans lequel l'au moins une zone partielle (10, 11, 12) inclinable de l'au moins un deuxième appui (5) s'appuie dans l'état relié au premier appui (4) de l'au moins un deuxième appui (5) dans la position de chargement contre le premier appui (4) ou un wagon kangourou (2).

10. Wagon kangourou avec un dispositif porteur (1) levable selon au moins l'une quelconque des revendications précédentes, dans lequel au moins une zone partielle (8, 9, 10, 11, 12) du premier et/ou de l'au moins un deuxième appui (4, 5) est réalisée avec une orientation horizontale ou inclinée, dans lequel il est de préférence prévu qu'une inclinaison de l'au moins une zone partielle soit prédéfinissable avant un chargement.

11. Wagon kangourou avec un dispositif porteur (1) levable selon la revendication précédente, dans lequel le deuxième appui (5) présente au moins une zone partielle (10, 11, 12) avec une inclinaison prédéfinie.

12. Procédé de chargement d'un wagon kangourou (2) au moyen d'un dispositif porteur (1) chargé avec au moins trois véhicules (3), en particulier en utilisant un dispositif porteur (1) selon l'une quelconque des revendications 1 à 11, dans lequel au moins un des au moins trois véhicules (3) est agencé sur le wagon kangourou (2) à une hauteur supérieure à au moins un autre des au moins trois véhicules (3), **caractérisé en ce que** le procédé présente au moins les étapes suivantes :
- la fourniture d'un premier et d'au moins un deuxième appui (4, 5) sur une rampe d'accès au terminal, dans lequel le premier et l'au moins un deuxième appui (4, 5) se dressent indépendamment l'un de l'autre sur la rampe d'accès au terminal,
- le chargement de l'au moins un deuxième appui (5) et éventuellement du premier appui (4) avec les véhicules (3) à charger, par montée des véhicules (3) sur le premier et/ou au moins un deuxième appui (4, 5),
- le dépôt de l'au moins un deuxième appui (5) chargé sur le premier appui (4) avant le levage sur le wagon kangourou (2) pour la formation d'un dispositif porteur (1) levable comme unité,
- éventuellement le chargement du premier appui (4)- au cas où celui-ci n'a pas déjà été complètement chargé - par montée du véhicule ou des véhicules,
- le levage du dispositif porteur (1) comme unité au moyen d'un dispositif de levage sur le wagon kangourou (2) de sorte que l'au moins un deuxième appui (5) soit agencé au-dessus du premier appui (4) et le premier appui (4) pénètre au moins partiellement dans une poche (13) du wagon kangourou (2).

13. Procédé de déchargement d'un wagon kangourou (2) chargé au moyen d'un dispositif porteur (1) avec au moins trois véhicules (3), en particulier en utilisant un dispositif porteur (1) selon l'une quelconque des revendications 1 à 11, dans lequel au moins un des au moins trois véhicules (3) est agencé sur un premier appui (4) du dispositif porteur (1) et au moins un des au moins trois véhicules (3) est agencé sur au moins un deuxième appui (5) du dispositif porteur (1), dans lequel l'au moins un deuxième appui (5) est déposé sur le premier appui (4) et le premier appui (4) est agencé dans une poche (13) du wagon kangourou (2), **caractérisé en ce que** le procédé présente au moins les étapes suivantes :
- l'extraction du dispositif porteur (1) en unité au moyen d'un dispositif de levage du wagon kangourou (2) et le dépôt sur une rampe de décharge,
- éventuellement le déchargement du premier appui (4) par sortie des véhicules (3) du premier appui (4),
- l'extraction de l'au moins un deuxième appui (5) du premier appui (4) et le dépôt de l'au moins un deuxième appui (5) sur une rampe de décharge,
- le déchargement de l'au moins un deuxième appui (5) et éventuellement du premier appui (4) par sortie des véhicules (3) du premier et de l'au moins un deuxième appui (4, 5).
